# EUROPEAN PATENT APPLICATION

(11) **EP 4 517 983 A1**
(43) Date of publication of application: **05.03.2025**
(21) Application number: 23796622.1
(22) Date of filing: 23.03.2023
(51) Int. Cl.: H01M 50/267, H01M 50/249, H01M 50/204, B60L 50/60, B60L 3/00, B60K 1/02

(54) **BATTERY PACK AND ELECTRIC VEHICLE INCLUDING BATTERY PACK**

(30) Priority: 29.04.2022 KR 20220053434
(71) Applicant: LG Energy Solution, Ltd., Seoul 07335 (KR)
(72) Inventor: JANG, Sunghwan, Daejeon 34122 (KR); SEONG, Junyeob, Daejeon 34122 (KR)
(74) Representative: Plasseraud IP
(86) International application number: PCT/KR2023/003897
(87) International publication number: WO 2023/210973

(57) **Abstract**

The present invention provides a battery pack including a base frame (100) which has a plate shape and a certain region (R) on an upper surface, and a plurality of batteries (200) having shapes of cross-sectional footprints (F) defined by an outermost profile of a cross section placed parallel to the upper surface of the base frame (100). The plurality of batteries (200) may be disposed inside the certain region (R)on the upper surface of the base frame (100). The plurality of batteries (200) may include a plurality of types of batteries (200N and 200S) having the cross-sectional footprints (F) which have different shapes. At least a portion (RCP) of a perimeter of the certain region R may obliquely extend. At least a portion (FCP) of a perimeter of the cross-sectional footprint (F) of a special type battery (200S), which is at least one type among the plurality of types of batteries (200), may obliquely extend along the at least a portion (RCP) of the perimeter of the certain region (R).

## Description

### [Technical Field]

This application claims the benefit of priority based on Korean Patent Application No. 10-2022-0053434, filed on April 29, 2022, and the entire contents of the Korean patent application are incorporated herein by reference.

The present invention relates to a battery pack and an electric vehicle including the battery pack, and more particularly, to a battery pack in which an energy density may be increased and energy efficiency, safety, and output power may be optimized and improved according to traveling environments or traveling conditions, and an electric vehicle including the battery pack.

### [Background Art]

As electric vehicles enter the mass market, the performance of battery packs embedded in electric vehicles is becoming more important. The performance of a battery pack may mean, for example, capacity, output power, energy efficiency, and safety of the battery pack. Here, a battery pack may accommodate a plurality of batteries (for example, battery modules) therein.

In order to increase the capacity of a battery pack, the energy density of a space inside the battery pack may be increased or the size of the battery pack itself may be increased. That is, in order to increase the energy density of a space inside a battery pack, it is possible to maximize the size or number of batteries disposed inside the battery pack and reduce wasted space.

In order to increase the output power, energy efficiency, or safety of a battery pack, the chemical characteristics of a battery may be adjusted. For example, the chemical characteristics of a battery may be controlled by changing an active material used in the battery or adjusting a rate, amount, or the like of a chemical reaction of the battery.

However, a plurality of batteries of a single type having the same shape and chemical characteristics are generally disposed in a battery pack. Accordingly, since a battery pack cannot be filled with a single type (shape) of batteries, wasted space occurs, or the size of the battery pack itself is reduced to correspond to the size of a plurality of batteries of a single type, which reduces the capacity of the battery pack. In addition, since a battery pack includes only a single type of batteries, the output power, energy efficiency, or safety of the battery pack is not optimized.

Korean Patent Publication No. 10-2016-0101382 discloses a conventional battery pack in which a plurality of batteries of a single type having the same shape and chemical characteristics are disposed. Therefore, in Korean Patent Publication No. 10-2016-0101382, the above-described problems also occur.

### [Description of Invention]

### [Technical Problems]

The present invention is directed to providing a battery pack in which an energy density of a space in which batteries (200) are disposed increases.

The present invention is directed to providing a battery pack having increased electric capacity.

The present invention is directed to providing a battery pack in which an energy density increases even when a space in which batteries (200) are disposed has various shapes or sizes.

The present invention is directed to providing a battery pack in which structural stability is improved and manufacturing and maintenance costs are reduced.

The present invention is directed to providing a battery pack in which an energy density may be increased, and simultaneously a structure, arrangement, configuration, or performance may be optimized and improved according to a use or an environment.

The present invention is directed to providing a battery pack of which safety is improved at a low cost.

The present invention is directed to providing an electric vehicle of which energy efficiency, safety, and output power may be optimized and improved according to traveling environments or traveling conditions.

The present invention is directed to providing an electric vehicle of which manufacturing and maintenance costs are reduced.

Objects of the present invention are not limited to the above-described objects, and other objects and advantages of the present invention will be understood by the following description and will be more definitely understood through the embodiments of the present invention. It is also to be easily understood that the objectives and advantages of the present invention may be realized and attained by means and a combination thereof described in the appended claims.

### [Technical Solutions]

According to an embodiment of the present invention, a battery pack (10) includes a base frame (100) and a plurality of batteries (200).

The base frame (100) may have a plate shape and a certain region (R) on an upper surface thereof.

The plurality of batteries (200) may have shapes of cross-sectional footprints (F) defined by an outermost profile of a cross section placed parallel to the upper surface of the base frame (100).

The plurality of batteries (200) may be disposed inside the certain region (R) on the upper surface of the base frame (100).

The plurality of batteries (200) may include a plurality of types of batteries (200N and 200S) having the cross-sectional footprints (F) which have different shapes.

The certain region (R) may extend in the first direction and the second direction perpendicular to the first direction.

At least a portion (RCP) of the perimeter of the certain region (R) may obliquely extend in a direction intersecting the first direction and the second direction.

The cross-sectional footprints (F) of the plurality of batteries (200) may extend in the first and second directions.

At least some of the plurality of batteries (200) may be disposed side by side in the first direction or the second direction.

Among the plurality of types of batteries (200), at least one type of battery (200) may be a special type battery (200S).

At least a portion (FCP) of the perimeter of the cross-sectional footprint (F) of the special type battery (200S) may obliquely extend in the direction intersecting the first direction and the second direction along the at least a portion (RCP) of the perimeter of the certain region (R) and may extend such that an angle difference between an extending direction of each section of the at least a portion (FCP) of the perimeter of the cross-sectional footprint (F) and an extending direction of each section of the at least a portion (RCP) of the perimeter of the certain region (R) corresponding to each section of the at least a portion (FCP) of the perimeter of the cross-sectional footprint (F) is less than a certain angle.

The plurality of types of batteries (200) may include at least one of a first type battery (200A), a second type battery (200B), a third type battery (200C), and a fourth type battery (200D).

The first type battery (200A), the second type battery (200B), the third type battery (200C), and the fourth type battery (200D) may each correspond to the special type battery (200S).

A perimeter of the cross-sectional footprint (F) of the first type battery (200A) may include a first side (a) extending in the first direction, a second side (b) and a third side (c) each extending from both ends of the first side (a) of the first type battery (200A) to one side in the second direction by different lengths, and a fourth side (d) corresponding to the at least a portion (FCP) of the perimeter of the cross-sectional footprint (F) and connecting one ends of the second side (b) and the third side (c) of the first type battery (200A) in the second direction.

A perimeter of the cross-sectional footprint (F) of the second type battery (200B) may include a first side (a) extending in the first direction, a second side (b) and a third side (c) each extending from both ends of the first side (a) of the second type battery (200B) to the other side in the second direction by different lengths, and a fourth side (d) corresponding to the at least a portion (FCP) of the perimeter of the cross-sectional footprint (F) and connecting the other ends of the second side (b) and the third side (c) of the second type battery (200B) in the second direction.

A perimeter of the cross-sectional footprint (F) of the third type battery (200C) may include a first side (a) extending in the first direction, a second side (b) extending from one end or the other end of the first side (a) of the third type battery (200C) in the first direction to the one side in the second direction, and a third side (c) corresponding to the at least a portion (FCP) of the perimeter of the cross-sectional footprint (F) and connecting the other end or the one end of the first side (a) of the third type battery (200C) in the first direction and one end of the second side (b) of the third type battery (200C) in the second direction.

A perimeter of the cross-sectional footprint (F) of the fourth type battery (200D) may include a first side (a) extending in the first direction, a second side (b) extending from one end or the other end of the first side (a) of the fourth type battery (200D) in the first direction to the other side in the second direction, and a third side (c) corresponding to the at least a portion (FCP) of the perimeter of the cross-sectional footprint (F) and connecting the other end or the one end of the first side (a) of the fourth type battery (200D) in the first direction and the other end of the second side (b) of the fourth type battery (200D) in the second direction.

The plurality of types of batteries 200 may include at least one of a fifth type battery (200E) and a sixth type battery (200F).

The fifth type battery (200E) and the sixth type battery (200F) may each correspond to the special type battery (200S).

A perimeter of the cross-sectional footprint (F) of the fifth type battery (200E) may include a first side (a) and a second side (b) disposed side by side in the first direction and extending in the second direction, a third side (C) corresponding to the at least a portion (FCP) of the perimeter of the cross-sectional footprint (F) and connecting one ends of the first side (a) and the second side (b) of the fifth type battery (200E) in the second direction, and a fourth side (d) corresponding to the at least a portion (FCP) of the perimeter of the cross-sectional footprint (F) and connecting the other ends of the first side (a) and the second side (b) of the fifth type battery (200E) in the second direction.

A perimeter of the cross-sectional footprint (F) of the sixth type battery (200F) may include a first side (a) extending in the second direction and a second side (b) of which both ends are connected to both ends of the first side (a) of the sixth type battery (200F) and which protrudes from the first side (a) of the sixth type battery (200F) to one side or the other side in the first direction and corresponds to the at least a portion (FCP) of the perimeter of the cross-sectional footprint (F).

The plurality of types of batteries (200) may include a normal type battery (200N).

A perimeter of the cross-sectional footprint (F) of the normal type battery (200N) may include a first side (a) and a second side (b) disposed side by side in the second direction and extending in the first direction by the same length and a third side (c) and a fourth side (d) which are disposed side by side in the first direction, extend in the second direction by the same length, and connect one ends and the other ends of the first side (a) and the second side (b) of the normal type battery (200N), respectively.

At least some of two or more type batteries (200) among the plurality of types may have different chemical characteristics for each type and thus may differ in at least one of energy output, energy efficiency, and safety.

The certain region (R) may extend in the first direction and the second direction perpendicular to the first direction.

The at least a portion (RCP) of the perimeter of the certain region (R) may obliquely extend in a direction intersecting the first direction and the second direction.

The cross-sectional footprints (F) of the plurality of batteries (200) may extend in the first and second directions.

At least some of the plurality of batteries (200) may be disposed side by side in the first direction or the second direction.

The plurality of types of batteries (200) may include one or more normal type batteries (200N) and one or more special type batteries (200S).

A perimeter of the cross-sectional footprint (F) of the normal type battery (200N) may include a first side (a) and a second side (b) disposed side by side in the second direction and extending in the first direction by the same length and a third side (c) and a fourth side (d) which are disposed side by side in the first direction, extend in the second direction by the same length, and connect one ends and the other ends of the first side (a) and the second side (b), respectively.

The at least a portion (FCP) of the perimeter of the cross-sectional footprint (F) of the special type battery (200S) may obliquely extend in the direction intersecting the first direction and the second direction along the at least a portion (RCP) of the perimeter of the certain region (R) and may extend such that the angle difference between the extending direction of each section of the at least a portion (FCP) of the perimeter of the cross-sectional footprint (F) and the extending direction of each section of the at least a portion (RCP) of the perimeter of the certain region corresponding to each section is less than the certain angle.

At least some of the special type batteries (200S) and at least some of the normal type batteries (200N) may have different chemical characteristics and thus may differ in at least one of energy output, energy efficiency, and safety.

In the at least some of the special type batteries (200S), the at least a portion (FCP) of the perimeter of the cross-sectional footprint (F) may be disposed adjacent to the at least a portion (RCP) of the perimeter of the certain region (R) corresponding to the at least a portion (FCP) of the perimeter of the cross-sectional footprint (F).

The normal type battery (200N) may be disposed on a remaining portion of the certain region (R) in which the special type battery (200S) is not disposed.

At least some of the batteries (200) among the special type batteries (200S) disposed adjacent to the at least a portion (RCP) of the perimeter of the certain region (R) may have higher safety than at least some of the batteries (200) among the normal type batteries (200N) that are not disposed adjacent to the at least a portion (RCP) of the perimeter of the certain region (R).

According to another embodiment of the present invention, an electric vehicle includes the battery pack (10) and wheels (20).

The base frame (100) may extend in the first direction and the second direction and may be coupled to the wheels (20).

At least a portion of a perimeter of one end portion of the certain region (R) in the first direction may correspond to the at least a portion (RCP) of the perimeter of the certain region (R).

Thus, in the at least some of the special type batteries (200S), the at least a portion (FCP) of the perimeter of the cross-sectional footprint (F) may be disposed adjacent to the at least a portion (RCP) of the perimeter of the one end portion of the certain region (R) in the first direction corresponding to the at least a portion (FCP) of the perimeter of the cross-sectional footprint (F).

One side of the base frame (100) in the first direction may be a front side of a vehicle.

The other side of the base frame (100) in the first direction may be a rear side of the vehicle.

Thus, the one end portion of the certain region (R) in the first direction may be the front side of the vehicle.

The one end portion of the certain region (R) in the first direction may include a certain section (S) in the first direction of which a width in the second direction gradually decreases toward one side in the first direction.

A perimeter of the certain region (R) belonging to the certain section (S) may correspond to the at least a portion (RCP) of the perimeter of the certain region (R).

The electric vehicle may include a first motor (30A) and a second motor (30B) provided at one side and the other side in the first direction, respectively. The wheels (20) may include one or more first wheels (20A) provided at the one side in the first direction and coupled to the first motor (30A) and one or more second wheels (20B) provided at the other side in the first direction and coupled to the second motor (30B).

Among the special type batteries (200S) disposed adjacent to the at least a portion of the perimeter of the one end portion of the certain region (R) in the first direction, at least some of the batteries (200) may be connected to the first motor (30A) to supply power to the first motor (30A).

At least some of the batteries (200) among the normal type batteries (200N) disposed on remaining portions of the certain region (R) on which the special type batteries (200S) are not disposed may be connected to the second motor (30B) to supply power to the second motor (30B).

The special type battery (200S) connected to the first motor (30A) and the normal type battery (200N) connected to the second motor (30B) may differ in at least one of energy output, energy efficiency, and safety.

The special type battery (200S) connected to the first motor (30A) may have higher energy efficiency and safety and lower output power than the normal type battery (200N) connected to the second motor (30B).

### [Advantageous Effects]

According to embodiments of the present invention, a battery pack 10 may include a base frame (100) and a plurality of batteries (200). The base frame (100) may have a plate shape and a certain region (R) on an upper surface thereof. The plurality of batteries (200) may have shapes of cross-sectional footprints (F) defined by an outermost profile of a cross section placed parallel to the upper surface of the base frame (100). The plurality of batteries (200) may be disposed inside the certain region (R) on the upper surface of the base frame (100). The plurality of batteries (200) may include a plurality of types of batteries (200N and 200S) having the cross-sectional footprints (F) which have different shapes.

Accordingly, the output power, capacity, and lifetime of the battery pack (10) may increase. In addition, even when the certain region (R) has various shapes or sizes, an energy density of the space inside the certain region (R) may increase. In addition, even when the certain region (R) is expanded in an arbitrary shape in which one type of battery (200) cannot be disposed among a plurality of types, since other types of batteries (200) may be disposed in an expanded region, the battery pack (10) or the certain region (R) may be expanded as much as possible, thereby increasing electric capacity of the battery pack (10).

According to embodiments of the present invention, the certain region (R) may extend in the first direction and the second direction perpendicular to the first direction. At least a portion (RCP) of a perimeter of the certain region (R) may obliquely extend in the direction intersecting the first direction and the second direction. The cross-sectional footprints (F) of the plurality of batteries (200) may extend in the first and second directions. At least some of the plurality of batteries (200) may be disposed side by side in the first direction or the second direction. Among the plurality of types of batteries (200), at least one type of battery (200) may be a special type battery (200S). At least a portion (FCP) of a perimeter of the cross-sectional footprint (F) of the special type battery (200S) may obliquely extend in the direction intersecting the first direction and the second direction along the at least portion (RCP) of the perimeter of the certain region (R) and may extend such that an angle difference between an extending direction of each section of the at least a portion (FCP) of the perimeter of the cross-sectional footprint (F) and an extending direction of each section of the at least a portion (RCP) of the perimeter of the certain region (R) corresponding to each section of the at least a portion (FCP) of the perimeter of the cross-sectional footprint (F) is less than a certain angle.

Accordingly, even when at least a portion (RCP) of the perimeter of the certain region (R) obliquely extends in the direction intersecting the first direction or the second direction in which at least some of the batteries (200) are disposed side by side inside the certain region (R), since the special type battery (200S) having a shape corresponding to the at least a portion (RCP) of the perimeter of the certain region (R) may be disposed inside the certain region (R), an energy density of the space inside the certain region (R) may increase. Accordingly, the output power, capacity, and lifetime of the battery pack (10) may increase.

In addition, even when the certain region (R) has various shapes, an energy density of the space inside the certain region (R) may increase.

In addition, even when the certain region (R) is expanded to have a perimeter obliquely extending in the direction intersecting the first direction and the second direction, since the special type battery (200S) may be disposed in an expanded region, the battery pack (10) or the certain region (R) may be expanded as much as possible, thereby increasing electric capacity of the battery pack (10).

According to embodiments of the present invention, the plurality of types of batteries (200) may include at least one of a first type battery (200A), a second type battery (200B), a third type battery (200C), and a fourth type battery (200D). The first type battery (200A), the second type battery (200B), the third type battery (200C), and the fourth type battery (200D) may each correspond to the special type battery (200S). A perimeter of the cross-sectional footprint (F) of the first type battery (200A) may include a first side (a) extending in the first direction, a second side (b) and a third side (c) each extending from both ends of the first side (a) of the first type battery (200A) to one side in the second direction by different lengths, and a fourth side (d) corresponding to the at least a portion (FCP) of the perimeter of the cross-sectional footprint (F) and connecting one ends of the second side (b) and the third side (c) of the first type battery (200A) in the second direction. A perimeter of the cross-sectional footprint (F) of the second type battery (200B) may include a first side (a) extending in the first direction, a second side (b) and a third side (c) each extending from both ends of the first side (a) of the second type battery (200B) to the other side in the second direction by different lengths, and a fourth side (d) corresponding to the at least a portion (FCP) of the perimeter of the cross-sectional footprint (F) and connecting the other ends of the second side (b) and the third side (c) of the second type battery (200B) in the second direction. A perimeter of the cross-sectional footprint (F) of the third type battery (200C) may include a first side (a) extending in the first direction, a second side (b) extending from one end or the other end of the first side (a) of the third type battery (200C) in the first direction to the one side in the second direction, and a third side (c) corresponding to the at least a portion (FCP) of the perimeter of the cross-sectional footprint (F) and connecting the other end or the one end of the first side (a) of the third type battery (200C) in the first direction and one end of the second side (b) of the third type battery (200C) in the second direction. A perimeter of the cross-sectional footprint (F) of the fourth type battery (200D) may include a first side (a) extending in the first direction, a second side (b) extending from one end or the other end of the first side (a) of the fourth type battery (200D) in the first direction to the other side in the second direction, and a third side (c) corresponding to the at least a portion (FCP) of the perimeter of the cross-sectional footprint (F) and connecting the other end or one end of the first side (a) of the fourth type battery (200D) in the first direction and the other end of the second side (b) of the fourth type battery (200D) in the second direction.

Accordingly, even when the at least a portion (RCP) of the perimeter of the certain region (R) obliquely extending in the direction intersecting the first direction or the second direction is formed at one side or the other side of the certain region (R) in the second direction, since the first/second/third/fourth type batteries (200A, 200B, 200C, and 200D) with shapes corresponding to the at least a portion (RCP) may be disposed inside the certain region (R), an energy density of the space inside the certain region (R) may increase. Accordingly, the output power, capacity, and lifetime of the battery pack (10) may increase.

In addition, even when one side or the other side of the certain region (R) in the second direction has various shapes obliquely extending in the direction intersecting the first direction or the second direction, an energy density of the space inside the certain region (R) may increase.

In addition, at least one side of the perimeter of the cross-sectional footprint (F) of the first/second/third/fourth type battery (200A, 200B, 200C, or 200D) may extend in the first direction or the second direction. Accordingly, the first/second/third/fourth type batteries (200A, 200B, 200C, and 200D) may be easily disposed side by side with adjacent batteries (200) in the second direction or the first direction, and even when receiving an external force in the first direction or the second direction, the first/second/third/fourth type batteries (200A, 200B, 200C, and 200D) may be fixed to the base frame (100) along the second direction or the first direction perpendicular thereto, and structural stability can be improved. In addition, empty space between the batteries (200) can be minimized, thereby increasing an energy density of the space inside the certain region (R).

According to embodiments of the present invention, the plurality of types of batteries (200) may include at least one of a fifth type battery (200E) and a sixth type battery (200F). The fifth type battery (200E) and the sixth type battery (200F) may each correspond to the special type battery (200S). A perimeter of the cross-sectional footprint (F) of the fifth type battery (200E) may include a first side (a) and a second side (b) disposed side by side in the first direction and extending in the second direction, a third side (c) corresponding to the at least a portion (FCP) of the perimeter of the cross-sectional footprint (F) and connecting one ends of the first side (a) and the second side (b) of the fifth type battery (200E) in the second direction, and a fourth side (d) corresponding to the at least a portion (FCP) of the perimeter of the cross-sectional footprint (F) and connecting the other ends of the first side (a) and the second side (b) of the fifth type battery (200E) in the second direction. A perimeter of the cross-sectional footprint (F) of the sixth type battery (200F) may include a first side (a) extending in the second direction and a second side (b) of which both ends are connected to both ends of the first side (a) of the sixth type battery (200F) and which protrudes from the first side (a) of the sixth type battery (200F) to one side or the other side in the first direction and corresponds to the at least a portion (FCP) of the perimeter of the cross-sectional footprint (F).

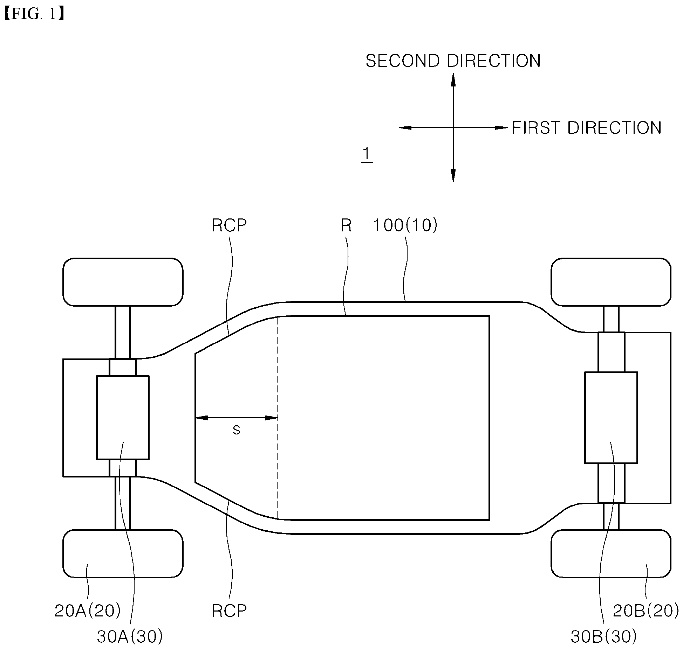

Accordingly, even when the certain region (R) includes, for example, a section (for example, S in FIG. 1) of which a width in the second direction changes toward one end or the other end thereof in the first direction like a bell shape, since the fifth/sixth type battery (200E or 200F) including a shape of the certain region (R) corresponding to the section (S) may be disposed inside the certain region (R) corresponding to the section (S), an energy density of the space inside the certain region (R) may increase. Accordingly, the output power, capacity, and lifetime of the battery pack (10) may increase.

In addition, even when one side or the other side of the certain region (R) in the first direction has various shapes, an energy density of the space inside the certain region (R) may increase.

In addition, at least one side of the perimeter of the cross-sectional footprint (F) of the fifth/sixth type battery (200E or 200F) may extend in the second direction. Accordingly, the fifth/sixth type batteries (200E and 200F) may be easily disposed side by side with adjacent batteries (200) in the first direction, and even when receiving an external force in the first direction, the fifth/sixth type batteries (200E and 200F) may be fixed to the base frame (100) along the second direction perpendicular thereto, and structural stability can be improved. In addition, empty space between the batteries (200) can be minimized, thereby increasing an energy density of the space inside the certain region (R).

According to embodiments of the present invention, the plurality of types of batteries (200) may include a normal type battery (200N). A perimeter of the cross-sectional footprint (F) of the normal type battery (200N) may include a first side (a) and a second side (b) disposed side by side in the second direction and extending in the first direction by the same length and a third side (c) and a fourth side (d) which are disposed side by side in the first direction, extend in the second direction by the same length, and connect one ends and the other ends of the first side (a) and the second side (b) of the normal type battery (200N), respectively.

Accordingly, the normal type battery (200N) having a normal shape with the cross-sectional footprint having a rectangular shape and the special type battery (200S) having a special shape with the cross-sectional footprint with a trapezoidal shape, a triangular shape, or the like may be disposed together inside the certain region (R). The normal type battery (200N) may be commonly disposed inside the certain region (R) having various shapes irrespective of a shape of the perimeter of the certain region (R) and may have a simple structure so that manufacturing costs thereof may be lower than those of the special type battery (200S). Accordingly, since the normal type battery (200N) and the special type battery (200S) are disposed together inside the certain region (R), manufacturing costs of the battery pack (10) can be reduced.

Also, a perimeter of the cross-sectional footprint (F) of the normal type battery (200N) may extend in the first and second directions. Accordingly, the normal type batteries (200N) may be easily disposed side by side with the adjacent first/second/third/fourth/fifth/sixth type batteries (200A, 200B, 200C, 200D, 200E, and 200F) in the first direction or the second direction, and even when receiving an external force in the first direction or the second direction, the normal type batteries (200N) may be fixed to the base frame (100) along the second direction or the first direction perpendicular thereto, and structural stability can be improved. In addition, empty space between the normal type batteries (200N) and the first/second/third/fourth/fifth/sixth type batteries (200A, 200B, 200C, 200D, 200E, and 200F) may be minimized, thereby increasing an energy density of the space inside the certain region (R).

According to embodiments of the present invention, at least some of two or more type batteries (200) among the plurality of types may have different chemical characteristics for each type and thus may differ in at least one of energy output, energy efficiency, and safety.

Accordingly, the characteristics of the batteries (200) may be varied along with the shapes of the batteries (200) disposed inside the certain region (R). Accordingly, an energy density of the battery pack (10) can be increased, and at the same time, the structure, arrangement, configuration, or performance of the battery pack (10) can be optimized and improved according to a use or an environment. In addition, the batteries (200) having different chemical characteristics may be easily distinguished based on the shapes (for example, the shapes of the cross-sectional footprints) of the batteries (200).

According to embodiments of the present invention, the certain region (R) may extend in the first direction and the second direction perpendicular to the first direction. At least a portion (RCP) of a perimeter of the certain region R may obliquely extend in the direction intersecting the first direction and the second direction. The cross-sectional footprints (F) of the plurality of batteries (200) may extend in the first and second directions. At least some of the plurality of batteries (200) may be disposed side by side in the first direction or the second direction. The plurality of types of batteries (200) may include one or more normal type batteries (200N) and one or more special type batteries (200S). A perimeter of the cross-sectional footprint (F) of the normal type battery (200N) may include a first side (a) and a second side (b) disposed side by side in the second direction and extending in the first direction by the same length and a third side (c) and a fourth side (d) which are disposed side by side in the first direction, extend in the second direction by the same length, and connect one ends and the other ends of the first side (a) and the second side (b), respectively. At least a portion (FCP) of a perimeter of the cross-sectional footprint (F) of the special type battery (200S) may obliquely extend in the direction intersecting the first direction and the second direction along at least a portion (RCP) of the perimeter of the certain region (R) and may extend such that an angle difference between an extending direction of each section of at least a portion (FCP) of the perimeter of the cross-sectional footprint (F) and an extending direction of each section of at least a portion (RCP) of the perimeter of the certain region (R) corresponding to each section is less than a certain angle. At least some of the special type batteries (200S) and at least some of the normal type batteries (200N) may have different chemical characteristics and thus may differ in at least one of energy output, energy efficiency, and safety.

Accordingly, the characteristics of the batteries (200) may be varied along with the shapes of the batteries (200) disposed inside the certain region (R). Accordingly, an energy density of the battery pack (10) can be increased, and at the same time, the structure, arrangement, configuration, or performance of the battery pack (10) can be optimized and improved according to a use or an environment. In addition, the batteries (200) having different chemical characteristics may be easily distinguished based on the shapes (for example, the shapes of the cross-sectional footprints) of the batteries (200).

According to embodiments of the present invention, in the at least some of the special type batteries (200S), the at least a portion (FCP) of the perimeter of the cross-sectional footprint (F) may be disposed adjacent to the at least a portion (RCP) of the perimeter of the certain region (R) corresponding to the at least a portion (FCP) of the perimeter of the cross-sectional footprint (F). The normal type battery (200N) may be disposed on the remaining portion of the certain region (R) in which the special type battery (200S) is not disposed. At least some of the batteries (200) among the special type batteries 200S disposed adjacent to the at least a portion (RCP) of the perimeter of the certain region (R) may have higher safety than at least some of the batteries (200) among the normal type batteries (200N) that are not disposed adjacent to the at least a portion (RCP) of the perimeter of the certain region (R).

Accordingly, since the special type battery (200S) is disposed adjacent to the perimeter of the certain region (R) and the normal type battery (200N) is disposed on the remaining portion, the number of normal type batteries (200N) is increased and the structure of the battery pack (10) is simplified, thereby reducing manufacturing and maintenance costs of the battery pack (100) and facilitating manufacturing and maintenance of the battery pack (10).

In addition, a battery (special type battery) that may be disposed adjacent to the perimeter of the certain region (R) and thus may receive much impact from the outside may have higher safety than a battery (normal type battery) that may not be disposed adjacent to the perimeter of the certain region (R) and thus may not receive much impact from the outside so that the safety of the battery pack (10) can be effectively improved at a low cost.

In addition, the special type battery (200S), which may be structurally unstable by including a portion obliquely extending in the direction intersecting the first and second directions along the at least a portion (RCP) of the perimeter of the certain region (R) and may have a large area facing the outside of the battery pack (10), may have higher safety than the normal type battery (200N) which may be structurally stable by not including a portion obliquely extending in the direction intersecting the first and second directions and may have a small area facing the outside of the battery pack (10) so that the safety of the battery pack (10) can be effectively improved at a low cost.

According to embodiments of the present invention, an electric vehicle may include a battery pack 10 and wheels 20. The base frame 100 may extend in a first direction and a second direction and may be coupled to the wheels 20. At least a portion (RCP) of a perimeter of one end portion of a certain region (R) of the battery pack (10) in the first direction may correspond to the at least a portion (RCP) of a perimeter of the certain region (R). Thus, in at least some of special type batteries (200S), the at least a portion (FCP) of the perimeter of a cross-sectional footprint (F) may be disposed adjacent to the at least a portion of the perimeter of one end portion of the certain region (R) in the first direction corresponding to the at least a portion (FCP) of the perimeter of the cross-sectional footprint (F).

Accordingly, a battery (special type battery) that may be disposed adjacent to the at least a portion (RCP) of the perimeter of one end portion of the certain region (R) in the first direction and thus may receive much impact from the outside may have higher safety than a battery (normal type battery) that may not be disposed adjacent to the at least a portion (RCP) of the perimeter of one end portion of the certain region (R) in the first direction and may not receive much impact from the outside so that the safety of the battery pack (10) installed in the electric vehicle (1) can be effectively improved at a low cost.

In addition, the special type batteries (200S), which may be structurally unstable by including a portion obliquely extending in the direction intersecting the first and second directions along the at least a portion (RCP) of the perimeter of one end portion of the certain region (R) in the first direction and may have a large area facing the outside of the battery pack (10), may have higher safety than normal type batteries (200N) which may be structurally stable by not including a portion obliquely extending in the direction intersecting the first and second directions and may have a small area facing the outside of the battery pack (10) so that the safety of the battery pack (10) installed in the electric vehicle (1) can be effectively improved at a low cost.

According to embodiments of the present invention, one side of the base frame (100) in the first direction may be a front side of a vehicle. The other side of the base frame (100) in the first direction may be a rear side of the vehicle. Thus, one end portion of the certain region (R) in the first direction may be the front side of the vehicle.

Accordingly, a battery (special type battery) that may be disposed at the front side of the vehicle and thus may receive much impact during a vehicle collision may have higher safety than other batteries (for example, the normal type battery) that may not receive much impact during a vehicle collision so that the safety of the battery pack (10) installed in the electric vehicle (1) can be effectively improved at a low cost.

According to embodiments of the present invention, one end portion of the certain region (R) in the first direction may include a certain section (S) in the first direction of which a width in the second direction gradually decreases toward one side in the first direction. A perimeter of the certain region (R) belonging to the certain section (S) may correspond to the at least a portion (RCP) of the perimeter of the certain region (R).

Accordingly, even when a front side of the certain region (R) includes the certain section (S) to form a bell shape, the special type battery (200S) with high safety may be disposed adjacent to the perimeter of the certain region (R) belonging to the certain section (S). Therefore, for example, even when the front side of the electric vehicle (1) is streamlined to reduce air resistance, and thus the front side of the certain region (R) forms a bell shape, the safety of the battery pack (10) installed in the electric vehicle (1) can be effectively improved at a low cost.

According to embodiments of the present invention, the electric vehicle may include a first motor (30A) and a second motor (30B) provided at one side and the other side in the first direction, respectively. The wheels (20) may include one or more first wheels (20A) provided at one side in the first direction and coupled to the first motor (30A) and one or more second wheels (20B) provided at the other side in the first direction and coupled to the second motor (30B). Among the special type batteries (200S) disposed adjacent to the at least a portion of the perimeter of one end portion of the certain region (R) in the first direction, at least some of the batteries (200) may be connected to the first motor (30A) to supply power to the first motor (30A). At least some of the batteries (200) among the normal type batteries (200N) disposed on the remaining portions of the certain region (R) on which the special type batteries (200S) are not disposed are connected to the second motor (30B) to supply power to the second motor (30B). The special type battery (200S) connected to the first motor (30A) and the normal type battery (200N) connected to the second motor (30B) may differ in at least one of energy output, energy efficiency, and safety.

Accordingly, according to traveling environments or traveling conditions, the motor (30) connected to the battery (200) with characteristics corresponding to the traveling environments or the traveling conditions can be easily driven with a simple configuration at a low cost. Accordingly, the energy efficiency, safety, output, and the like of the electric vehicle can be optimized and improved according to traveling environments or traveling conditions.

In addition, since the first/second motors (30A and 30B) and the special/normal type batteries (200S and 200N) connected to the first/second motors (30A and 30B) are positioned close to each other, wiring is easy, which reduces manufacturing and maintenance costs.

According to embodiments of the present invention, the special type battery (200S) connected to the first motor (30A) may have higher energy efficiency and safety and lower output power than the normal type battery (200N) connected to the second motor (30B).

Accordingly, in traveling environments or traveling conditions in which high energy efficiency and safety are required, the first motor (30A) connected to the special type battery (200S) with characteristics meeting the traveling environments or the traveling conditions can be driven. On the other hand, in traveling environments or conditions in which high output power is required, the second motor (30B) connected to the normal type battery (200N) with characteristics meeting the traveling environments or the traveling conditions can be driven. Accordingly, the energy efficiency, safety, output, and the like of the electric vehicle can be optimized and improved according to traveling environments or traveling conditions.

In addition to the above-described effects, specific effects of the present invention will be described together with the following detailed description for implementing the present invention.

### [Brief Description of Drawings]

FIG. 1 is a schematic view illustrating some components of an electric vehicle including a battery pack according to one embodiment of the present invention and is a plan view illustrating a state in which batteries are removed from the battery pack.
FIG. 2 is a schematic view illustrating a state in which the batteries are installed in the battery pack of FIG. 1 and is a plan view illustrating an electric vehicle including the battery pack according to a first embodiment.
FIG. 3 is a schematic view illustrating a state in which the batteries are installed in the battery pack of FIG. 1 and is a plan view illustrating an electric vehicle including the battery pack according to a second embodiment.
FIG. 4 is a schematic view illustrating a state in which the batteries are installed in the battery pack of FIG. 1 and is a plan view illustrating an electric vehicle including the battery pack according to a third embodiment.

### [Descriptions of Reference Numerals]

| | | | |
|---|---|---|---|
| 1: | electric vehicle | | |
| 10: | battery module | 20: | wheel |
| 20A: | first wheel | 20B: | second wheel |
| 30: | motor | 30A: | first motor |
| 30B: | second motor | | |
| 100: | base frame | R: | certain region |
| 200: | battery | F: | cross-sectional footprint |
| 200A: | first type battery | 200B: | second type battery |
| 200C: | third type battery | 200D: | fourth type battery |
| 200E: | fifth type battery | 200F: | sixth type battery |
| 200N: | normal type battery | 200S: | special type battery |

### [Detailed Description of Exemplary Embodiments]

The above objects, features and advantages will be described later in detail with reference to the accompanying drawings, and accordingly, those skilled in the art to which the present invention belongs will be able to easily implement the technical idea of the present invention. In describing the present invention, if it is determined that the detailed description of the known technology related to the present invention may unnecessarily obscure the subject matter of the present invention, the detailed description will be omitted. Hereinafter, preferred embodiments according to the present invention will be described in detail with reference to the accompanying drawings. In the drawings, the same reference numerals are used to indicate the same or similar components.

Although "first", "second", and the like may be used to describe various components, these components are not limited by these terms. These terms are only used to distinguish one component from another component, and unless otherwise stated, the first component may be the second component, of course.

Throughout the specification, unless otherwise stated, each component may be singular or plural.

Hereinafter, the arrangement of an arbitrary component on the "upper portion (or lower portion)" or "upper (or lower)" of a component means that an arbitrary component is placed in contact with the upper (or lower) surface of the component. **In** addition, it may mean that other components may be interposed between the component and any component disposed on (or under) the component.

**In** addition, when a component is described as "linked", "coupled" or "connected" to another component, the components may be directly connected or connected to each other, but other components may be "interposed" between each component. ", or each component may be "linked", "coupled" or "connected" through other components.

Singular expressions used herein include plural expressions unless the context clearly dictates otherwise. In this application, terms such as "consisting of" or "comprising" should not be construed as necessarily including all of the various components or steps described in the specification. It should be construed that it may not include some of the components or some of the steps, or may further include additional components or steps.

In addition, singular expressions used herein include plural expressions unless the context clearly dictates otherwise. In this application, terms such as "consisting of" or "comprising" should not be construed as necessarily including all of the various components or steps described in the specification. It should be construed that it may not include some of the components or some of the steps, or may further include additional components or steps.

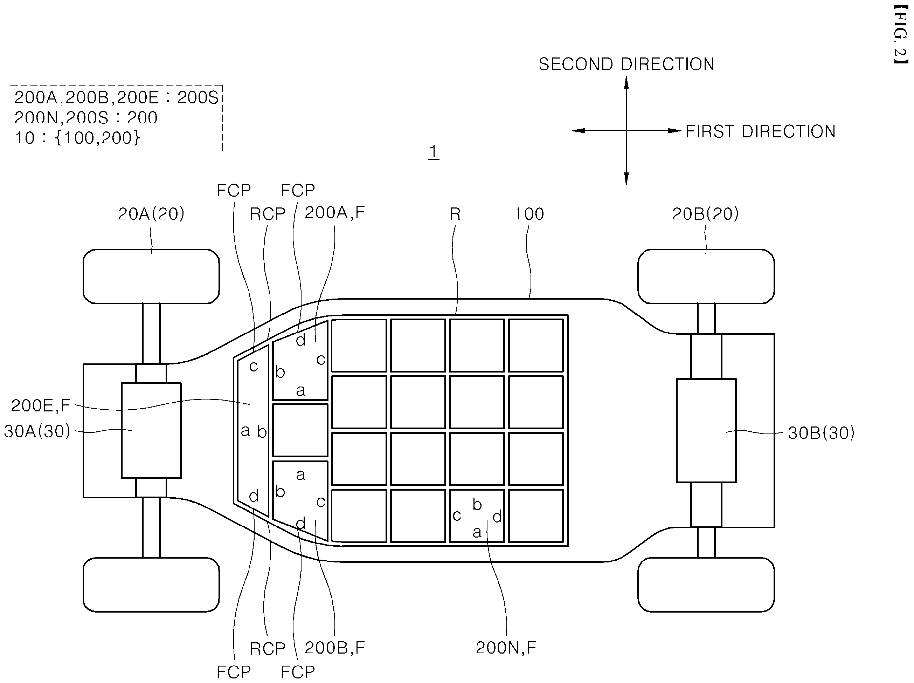

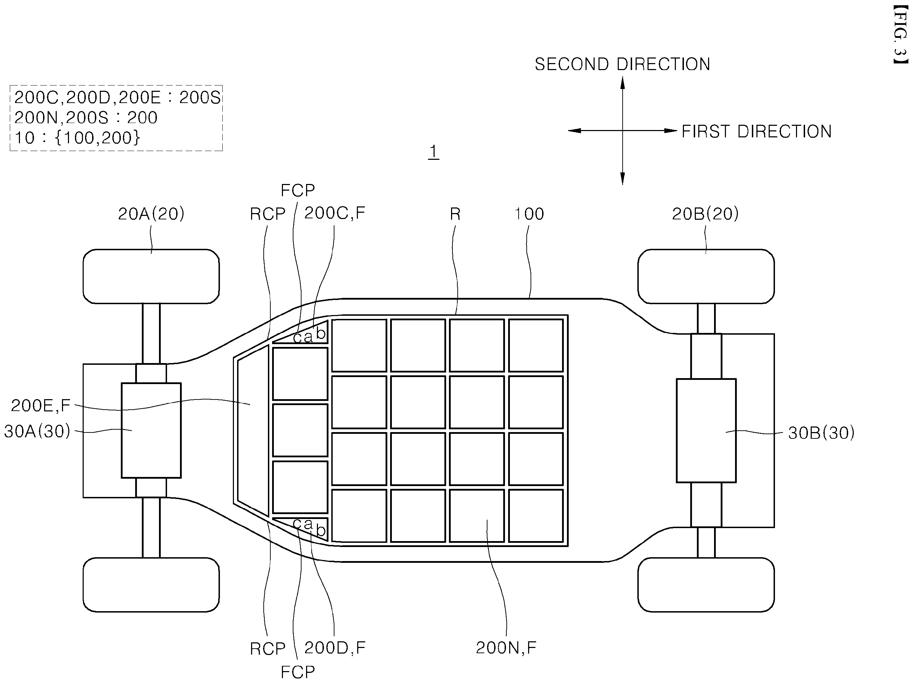

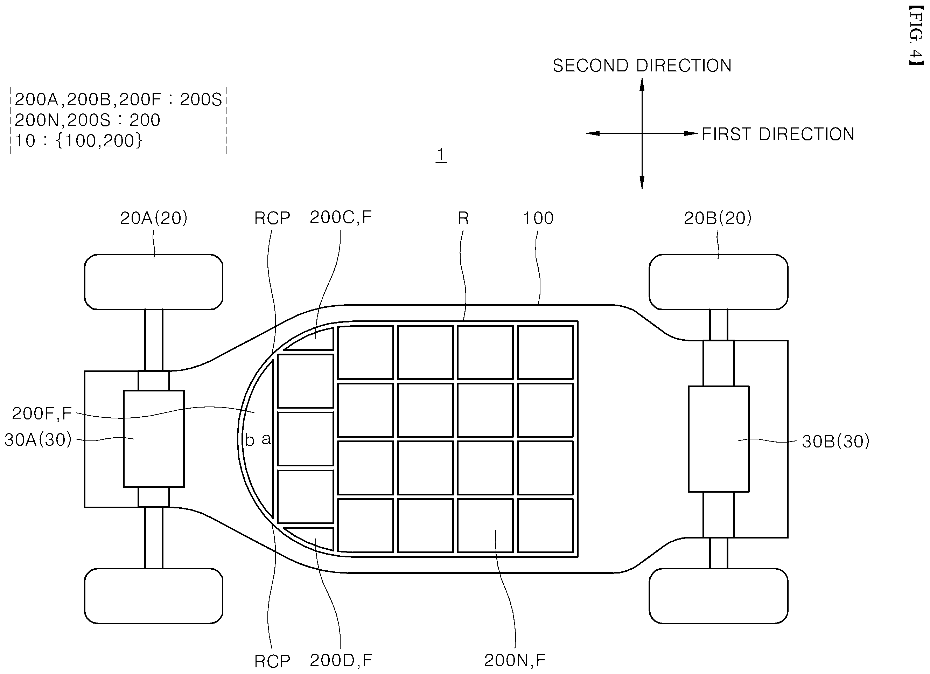

FIG. 1 is a schematic view illustrating some components of an electric vehicle including a battery pack according to one embodiment of the present invention and is a plan view illustrating a state in which batteries are removed from the battery pack. FIG. 2 is a schematic view illustrating a state in which the batteries are installed in the battery pack of FIG. 1 and is a plan view illustrating an electric vehicle including the battery pack according to a first embodiment. FIG. 3 is a schematic view illustrating a state in which the batteries are installed in the battery pack of FIG. 1 and is a plan view illustrating an electric vehicle including the battery pack according to a second embodiment. FIG. 4 is a schematic view illustrating a state in which the batteries are installed in the battery pack of FIG. 1 and is a plan view illustrating an electric vehicle including the battery pack according to a third embodiment.

### [Battery pack]

Referring to FIGS. 1 to 4, a battery pack 10 according to one embodiment may include a base frame 100 and a plurality of batteries 200.

The base frame 100 may have a plate shape.

The base frame 100 may have a certain region R on an upper surface thereof.

The certain region R may extend in a first direction (for example, a front-rear direction) and a second direction perpendicular to the first direction (for example, a left-right direction).

At least a portion RCP of a perimeter of the certain region R may obliquely extend in a direction intersecting the first direction and the second direction.

The plurality of batteries 200 may be disposed inside the certain region R on the upper surface of the base frame 100.

Here, the battery 200 may be a battery module. However, the present invention is not limited thereto.

The plurality of batteries 200 may have shapes of cross-sectional footprints F defined by an outermost profile of a cross section placed parallel to the upper surface of the base frame 100.

The plurality of batteries 200 may include a plurality of types of batteries 200N and 200S having the cross-sectional footprints F which have different shapes.

In the plurality of types of batteries 200, an area of the cross-sectional footprint F may be smaller than an area of the certain region R.

As compared with a case in which one or more batteries 200 corresponding to any one type among a plurality of types are disposed inside the certain region R, when the plurality of batteries 200, that is, the plurality of types of batteries 200 having the cross-sectional footprints F with different shapes, are disposed inside the certain region R, an energy density of a space inside the certain region R may increase. That is, the maximum value of the sum of areas of the shapes of the cross-sectional footprints F of the plurality of batteries 200 in a state in which the plurality of batteries 200 provided as the plurality of types of batteries 200N and 200S are disposed inside the certain region R may be greater than the maximum value of the sum of the areas of the cross-sectional footprint shapes of the plurality of batteries 200 in a state in which the plurality of batteries 200 provided as a single type of batteries 200N are disposed inside the certain region R.

For example, as illustrated in FIG. 3, even when as many normal type batteries 200N of a single type having the cross-sectional footprint F with a rectangular shape as possible are disposed in rows and columns in the first and second directions inside the certain region R, a space inside the certain region R in which the normal type battery 200N cannot be disposed may be empty. Special type batteries 200S, which have a different cross-sectional footprint F from the normal type batteries 200N and are installable in such an empty space, are disposed in the empty space, thereby increasing an energy density of the space inside the certain region R.

Accordingly, the output power, capacity, and lifetime of the battery pack 10 may increase. In addition, even when the certain region R has various shapes or sizes, an energy density of the space inside the certain region R may increase. In addition, even when the certain region R is expanded in an arbitrary shape in which any one type of battery 200 cannot be disposed among a plurality of types, since other types of batteries 200 may be disposed in an expanded region, the battery pack 10 or the certain region R may be expanded as much as possible, thereby increasing electric capacity of the battery pack 10.

The cross-sectional footprints F of the plurality of batteries 200 may extend in the first and second directions.

At least some of the plurality of batteries 200 may be disposed side by side in the first direction or the second direction.

Among the plurality of types of batteries 200, at least one type of battery 200 may be the special type battery 200S.

The special type battery 200S may be the battery 200 in which at least a portion FCP of a perimeter of the sectional footprint F obliquely extends in a direction intersecting the first direction and the second direction along the at least a portion RCP of the perimeter of the certain region R.

In this case, the at least a portion FCP of the perimeter of the cross-sectional footprint F of the special type battery 200S may form a straight line or a curved line.

In addition, the at least a portion FCP of the perimeter of the cross-sectional footprint F of the special type battery 200S may not exactly correspond to the at least a portion RCP of the perimeter of the certain region R.

For example, an angle difference between an extending direction of each section of the at least a portion FCP of the perimeter of the cross-sectional footprint F of the special type battery 200S and an extending direction of each section of the at least a portion RCP of the perimeter of the certain region R corresponding to each section (each section of the at least a portion of the perimeter of the cross-sectional footprint of the special type battery) may be less than a certain angle. Here, the certain angle may be, for example, 30 degrees.

Accordingly, even when at least a portion RCP of the perimeter of the certain region R obliquely extends in a direction intersecting the first direction or the second direction in which at least some of the batteries 200 are disposed side by side inside the certain region R, since the special type battery 200S having a shape corresponding to the at least a portion (RCP) of the perimeter of the certain region R may be disposed inside the certain region R so that an energy density of the space inside the certain region R may increase. Accordingly, the output power, capacity, and lifetime of the battery pack 10 may increase.

In addition, even when the certain region R has various shapes, an energy density of the space inside the certain region R may increase.

In addition, even when the certain region R is expanded to have a perimeter obliquely extending in a direction intersecting the first direction and the second direction, since the special type battery 200S may be disposed in an expanded region, the battery pack 10 or the certain region R may be expanded as much as possible, thereby increasing electric capacity of the battery pack 10,

The plurality of types of batteries 200 may include at least one of a first type battery 200A, a second type battery 200B, a third type battery 200C, and a fourth type battery 200D.

The first type battery 200A, the second type battery 200B, the third type battery 200C, and the fourth type battery 200D may each correspond to the special type battery 200S. This will be described in detail as follows.

A perimeter of the cross-sectional footprint F of the first type battery 200A may include a first side a extending in the first direction, a second side b and a third side c each extending from both ends of the first side a of the first type battery 200A to one side (for example, a left side) in the second direction by different lengths, and a fourth side d corresponding to the at least a portion FCP of the perimeter of the cross-sectional footprint F and connecting one ends (for example, left ends) of the second side b and the third side c of the first type battery 200A in the second direction (see FIG. 2).

A perimeter of the cross-sectional footprint F of the second type battery 200B may include a first side a extending in the first direction, a second side b and a third side c each extending from both ends of the first side a of the second type battery 200B to the other side (for example, a right side) of the second direction by different lengths, and a fourth side d corresponding to the at least a portion FCP of the perimeter of the cross-sectional footprint F and connecting the other ends (for example, right ends) of the second side b and the third side c of the second type battery 200B in the second direction (see FIG. 2).

The fourth sides d of the first type battery 200A and the second type battery 200B corresponding to the at least a portion FCP of the perimeter of the cross-sectional footprint F may be straight lines as illustrated in FIG. 2 or may be curved lines unlike those illustrated in FIG. 2.

A perimeter of the cross-sectional footprint F of the third type battery 200C may include a first side a extending in the first direction, a second side b extending from one end (for example, a front end) or the other end (for example, a rear end) of the first side a of the third type battery 200C in the first direction to one side (for example, the left side) in the second direction, and a third side c corresponding to the at least a portion FCP of the perimeter of the cross-sectional footprint F and connecting the other end or one end of the first side a of the third type battery 200C in the first direction and one end of the second side b of the third type battery 200C in the second direction (see FIG. 3).

A perimeter of the cross-sectional footprint F of the fourth type battery 200D may include a first side a extending in the first direction, a second side b extending from one end or the other end of the first side a of the fourth type battery 200D in the first direction to the other side in the second direction, and a third side c corresponding to the at least a portion FCP of the perimeter of the cross-sectional footprint F and connecting the other end or one end of the first side a of the fourth type battery 200D in the first direction and the other end of the second side b of the fourth type battery 200D in the second direction (see FIG. 3).

The third sides d of the third type battery 200C and the fourth type battery 200D corresponding to the at least a portion FCP of the perimeter of the cross-sectional footprint F may be straight lines as illustrated in FIG. 3 or may be curved lines as illustrated in FIG. 4.

Accordingly, even when the at least a portion RCP of the perimeter of the certain region R obliquely extending in the direction intersecting the first direction or the second direction is formed at one side or the other side of the certain region R in the second direction, since the first/second/third/fourth type batteries 200A, 200B, 200C, and 200D with shapes corresponding to the at least a portion RCP may be disposed inside the certain region R, an energy density of the space inside the certain region R may increase. Accordingly, the output power, capacity, and lifetime of the battery pack 10 may increase.

In addition, even when one side or the other side of the certain region R in the second direction has various shapes obliquely extending in the direction intersecting the first direction or the second direction, an energy density of the space inside the certain region R may increase.

In addition, at least one side of the perimeter of the cross-sectional footprint F of the first/second/third/fourth type battery 200A, 200B, 200C, or 200D may extend in the first direction or the second direction. Accordingly, the first/second/third/fourth type batteries 200A, 200B, 200C, and 200D may be easily disposed side by side with adjacent batteries 200 in the second direction or the first direction, and even when receiving an external force in the first direction or the second direction, the first/second/third/fourth type batteries 200A, 200B, 200C, and 200D may be fixed to the base frame 100 along the second direction or the first direction perpendicular thereto, and structural stability can be improved. In addition, empty space between the batteries 200 can be minimized, thereby increasing an energy density of the space inside the certain region R.

The plurality of types of batteries 200 may include at least one of a fifth type battery 200E and a sixth type battery 200F.

The fifth type battery 200E and the sixth type battery 200F may correspond to the special type battery 200S. This will now be described in detail.

A perimeter of the cross-sectional footprint F of the fifth type battery 200E may include a first side a and a second side b disposed side by side in the first direction and extending in the second direction, a third side C corresponding to the at least a portion FCP of the perimeter of the cross-sectional footprint F and connecting one ends of the first side a and the second side b of the fifth type battery 200E in the second direction, and a fourth side d corresponding to the at least a portion FCP of the perimeter of the cross-sectional footprint F and connecting the other ends of the first side a and the second side b of the fifth type battery 200E in the second direction (see FIG. 2).

The third side c and the fourth side d of the fifth type battery 200E corresponding to the at least a portion FCP of the perimeter of the cross-sectional footprint F may be straight lines as illustrated in FIG. 2 or may be curved lines unlike those illustrated in FIG. 2

A perimeter of the cross-sectional footprint F of the sixth type battery 200F may include a first side a extending in the second direction and a second side b of which both ends are connected to both ends of the first side a of the sixth type battery 200F and which protrudes from the first side a of the sixth type battery 200F to one side or the other side in the first direction and corresponds to the at least a portion FCP of the perimeter of the cross-sectional footprint F (see FIG. 4).

The second side b of the sixth type battery 200F corresponding to the at least a portion FCP of the perimeter of the cross-sectional footprint F may be a curved line as illustrated in FIG. 4 or may have a bent line or a combination shape of a straight line and a curved line unlike that illustrated in FIG. 4.

Accordingly, even when the certain region R includes, for example, a section (for example, S in FIG. 1) of which a width in the second direction changes toward one end or the other end thereof in the first direction like a bell shape, since the fifth/sixth type battery 200E or 200F, which includes a shape of the certain region R corresponding to the section S, may be disposed inside the certain region R corresponding to the section S, an energy density of the space inside the certain region R may increase. Accordingly, the output power, capacity, and lifetime of the battery pack 10 may increase.

In addition, even when one side or the other side of the certain region R in the first direction has various shapes, an energy density of the space inside the certain region R may increase.

In addition, at least one side of the perimeter of the cross-sectional footprint F of the fifth/sixth type battery 200E or 200F may extend in the second direction. Accordingly, the fifth/sixth type batteries 200E and 200F may be easily disposed side by side with adjacent batteries 200 in the first direction, and even when receiving an external force in the first direction, the fifth/sixth type batteries 200E and 200F may be fixed to the base frame 100 along the second direction perpendicular thereto, and structural stability can be improved. In addition, empty space between the batteries 200 can be minimized, thereby increasing an energy density of the space inside the certain region R.

Meanwhile, as illustrated in the drawings, the first direction and the second direction used to materialize the first/second/third/fourth/fifth/sixth type batteries 200A, 200B, 200C, 200D, 200E, and 200F may correspond to a front-rear direction and a left-right direction of the electric vehicle 1, respectively. However, the present invention is not limited to such a configuration. For example, unlike what is illustrated in the drawings, the first direction and the second direction may correspond to the left-right direction and the front-rear direction of the electric vehicle 1, respectively.

The plurality of types of batteries 200 may include the normal type batteries 200N in addition to the special type batteries 200S.

A perimeter of the cross-sectional footprint F of the normal type battery 200N may include a first side a and a second side b disposed side by side in the second direction and extending in the first direction by the same length and a third side c and a fourth side d which are disposed side by side in the first direction, extend in the second direction by the same length, and connect one ends and the other ends of the first side a and the second side b of the normal type battery 200N, respectively.

Accordingly, the normal type battery 200N having a normal shape with the cross-sectional footprint having a rectangular shape and the special type battery 200S having a special shape with the cross-sectional footprint with a trapezoidal shape, a triangular shape, or the like may be disposed together inside the certain region R. The normal type battery 200N may be commonly disposed inside the certain region R having various shapes irrespective of a shape of the perimeter of the certain region R and may have a simple structure so that manufacturing costs thereof may be lower than those of the special type battery 200S. Accordingly, since the normal type battery 200N and the special type battery 200S are disposed together inside the certain region R, manufacturing costs of the battery pack 10 can be reduced.

Also, a perimeter of the cross-sectional footprint F of the normal type battery 200N may extend in the first and second directions. Accordingly, the normal type batteries 200N may be easily disposed side by side with the adjacent first/second/third/fourth/fifth/sixth type batteries 200A, 200B, 200C, 200D, 200E, and 200F in the first direction or the second direction, and even when receiving an external force in the first direction or the second direction, the normal type batteries 200N may be fixed to the base frame 100 along the second direction or the first direction perpendicular thereto, and structural stability can be improved. In addition, empty space between the normal type batteries 200N and the first/second/third/fourth/fifth/sixth type batteries 200A, 200B, 200C, 200D, 200E, and 200F may be minimized, thereby increasing an energy density of the space inside the certain region R.

At least some of two or more type batteries 200 among a plurality of types may have different chemical characteristics for each type and thus may differ in at least one of energy output, energy efficiency, and safety. Here, the chemical characteristics may include, for example, a type of active material, a rate or amount of a chemical reaction, and the like. However, the present invention is not limited thereto.

Specifically, for example, at least some of the special type batteries 200S and at least some of the normal type batteries 200N may have different chemical characteristics and thus may differ in at least one of energy output, energy efficiency, and safety. In addition, even though the first/second/third/fourth/fifth/sixth type batteries 200A, 200B, 200C, 200D, 200E, and 200F correspond to the special type batteries 200S, the first/second/third/fourth/fifth/sixth type batteries 200A, 200B, 200C, 200D, 200E, and 200F having different types may have different chemical characteristics and thus may differ in at least one of energy output, energy efficiency, and safety.

Accordingly, the characteristics of the batteries 200 may be varied along with the shapes of the batteries 200 disposed inside the certain region R. Accordingly, an energy density of the battery pack 10 can be increased, and at the same time, the structure, arrangement, configuration, or performance of the battery pack 10 can be optimized and improved according to a use or an environment. In addition, the batteries 200 having different chemical characteristics may be easily distinguished based on the shapes (for example, the shapes of the cross-sectional footprints) of the batteries 200.

In the at least some of the special type batteries 200S, the at least a portion FCP of the perimeter of the cross-sectional footprint F may be disposed adjacent to the at least a portion RCP of the perimeter of the certain region R corresponding to the at least a portion FCP of the perimeter of the cross-sectional footprint F. However, the present invention is not limited to such a configuration.

The normal type battery 200N may be disposed on the remaining portion of the certain region R in which the special type battery 200S is not disposed.

At least some of the batteries 200 among the special type batteries 200S disposed adjacent to the at least a portion RCP of the perimeter of the certain region R may have higher safety than at least some of the batteries 200 among the normal type batteries 200N that are not disposed adjacent to the at least a portion RCP of the perimeter of the certain region R.

Accordingly, since the special type battery 200S is disposed adjacent to the perimeter of the certain region R and the normal type battery 200N is disposed on the remaining portion, the number of normal type batteries 200N is increased, and the structure of the battery pack 10 is simplified, thereby reducing manufacturing and maintenance costs of the battery pack 10 and facilitating manufacturing and maintenance of the battery pack 10.

In addition, a battery (special type battery) that may be disposed adjacent to the perimeter of the certain region R and thus may receive much impact from the outside may have higher safety than a battery (normal type battery) that may not be disposed adjacent to the perimeter of the certain region R and thus may not receive much impact from the outside so that the safety of the battery pack 10 can be effectively improved at a low cost.

In addition, the special type battery 200S, which may be structurally unstable by including a portion obliquely extending in the direction intersecting the first and second directions along the at least a portion RCP of the perimeter of the certain region R and may have a large area facing the outside of the battery pack 10, may have higher safety than the normal type battery 200N which may be structurally stable by not including a portion obliquely extending in the direction intersecting the first and second directions and may have a small area facing the outside of the battery pack 10 so that the safety of the battery pack 10 can be effectively improved at a low cost.

### [Electric vehicle]

The electric vehicle 1 according to one embodiment may include the battery pack 10 and wheels 20. The electric vehicle 1 may include a motor 30.

The battery pack 10 is as described above. Hereinafter, a case in which the battery pack 10 is used in the electric vehicle 1 will be described.

The base frame 100 of the battery pack 10 may extend in the first and second directions.

At least a portion RCP of a perimeter of one end portion of the certain region R of the battery pack 10 in the first direction may correspond to the at least a portion RCP of the perimeter of the certain region R.

Thus, in at least some of the special type batteries 200S, the at least a portion FCP of the perimeter of the cross-sectional footprint F may be disposed adj acent to the at least a portion RCP of the perimeter of one end portion of the certain region R in the first direction corresponding to the at least a portion FCP of the perimeter of the cross-sectional footprint F.

In this case, at least some of the batteries 200 among the special type batteries 200S disposed adjacent to the at least a portion RCP of the perimeter of one end portion of the certain region R in the first direction may have higher safety than at least some of the batteries 200 among the normal type batteries 200N that are not disposed adjacent to the at least a portion RCP of the perimeter of one end portion of the certain region R in the first direction.

Accordingly, a battery (special type battery) that may be disposed adjacent to the at least a portion RCP of the perimeter of one end portion of the certain region R in the first direction and thus may receive much impact from the outside may have higher safety than a battery (normal type battery) that may not be disposed adjacent to the at least a portion RCP of the perimeter of one end portion of the certain region R in the first direction and may not receive much impact from the outside so that the safety of the battery pack 10 installed in the electric vehicle 1 can be effectively improved at a low cost.

In addition, the special type battery 200S, which may be structurally unstable by including a portion obliquely extending in the direction intersecting the first and second directions along the at least portion RCP of the perimeter of one end portion of the certain region R in the first direction and may have a large area facing the outside of the battery pack 10, may have higher safety than the normal type battery 200N which may be structurally stable by not including a portion obliquely extending in the direction intersecting the first and second directions and may have a small area facing the outside of the battery pack 10 so that the safety of the battery pack 10 installed in the electric vehicle 1 can be effectively improved at a low cost.

In this case, one side of the base frame 100 in the first direction may be a front side of a vehicle, and the other side of the base frame 100 in the first direction may be a rear side of the vehicle. Thus, one end portion of the certain region R in the first direction may be the front side of the vehicle.

Accordingly, a battery (special type battery) that may be disposed at the front side of the vehicle and thus may receive much impact during a vehicle collision may have higher safety than other batteries (for example, the normal type battery) that may not receive much impact during a vehicle collision so that the safety of the battery pack 10 installed in the electric vehicle 1 can be effectively improved at a low cost.

One end portion of the certain region R in the first direction may include a certain section S in the first direction of which a width in the second direction gradually decreases toward one side in the first direction.

A perimeter of the certain region R belonging to the certain section S may correspond to the at least a portion RCP of the perimeter of the certain region R.

Accordingly, even when a front side of the certain region R includes the certain section S to form a bell shape, the special type battery 200S with high safety may be disposed adjacent to the perimeter of the certain region R belonging to the certain section S. Therefore, for example, even when the front side of the electric vehicle 1 is streamlined to reduce air resistance, and thus the front side of the certain region R forms a bell shape, the safety of the battery pack 10 installed in the electric vehicle 1 can be effectively improved at a low cost.

The wheels 20 may be coupled to the base frame 100 of the battery pack 10.

The wheels 20 may include one or more first wheels 20A provided at one side of the electric vehicle 1 in the first direction and one or more second wheels 20B provided at the other side of the electric vehicle 1 in the first direction.

A first motor 30A and a second motor 30B may be provided at one side and the other side of the electric vehicle 1 in the first direction, respectively.

The first motor 30A may be coupled to one or more first wheels 20A.

The second motor 30B may be coupled to one or more second wheels 20B.

Among the special type batteries 200S disposed adjacent to the at least a portion of the perimeter of one end portion of the certain region R in the first direction, at least some of the batteries 200 may be connected to the first motor 30A to supply power to the first motor 30A.

At least some of the batteries 200 among the normal type batteries 200N disposed on the remaining portions of the certain region R on which the special type batteries 200S are not disposed are connected to the second motor 30B to supply power the second motor 30B.

The special type battery 200S connected to the first motor 30A and the normal type battery 200N connected to the second motor 30B may differ in at least one of energy output, energy efficiency, and safety.

Accordingly, the motor 30 connected to the battery 200 having characteristics corresponding to traveling environments or traveling conditions can be easily driven with a simple configuration at a low cost according to traveling environments or traveling conditions. Accordingly, the energy efficiency, safety, output, and the like of the electric vehicle can be optimized and improved according to traveling environments or traveling conditions.

In addition, since the first/second motors 30A and 30B and the special/normal type batteries 200S and 200N connected to the first/second motors 30A and 30B are positioned close to each other, wiring is easy, which reduces manufacturing and maintenance costs.

The special type battery 200S connected to the first motor 30A may have higher energy efficiency and safety and lower output power than the normal type battery 200N connected to the second motor 30B.

Accordingly, in traveling environments or traveling conditions in which high energy efficiency and safety are required, the first motor 30A connected to the special type battery 200S with characteristics meeting the traveling environments or the traveling conditions can be driven. On the other hand, in traveling environments or conditions in which high out power is required, the second motor 30B connected to the normal type battery 200N with characteristics meeting the traveling environments or the traveling conditions can be driven. Accordingly, the energy efficiency, safety, output, and the like of the electric vehicle can be optimized and improved according to traveling environments or traveling conditions.

Meanwhile, although a case in which the battery pack 10 is used in the electric vehicle 1 is illustrated in the drawings, the present invention is not limited to such a configuration. That is, the battery pack 10 may be used in various devices other than the electric vehicle 1.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery pack comprising:
a base frame (100) which has a plate shape and a certain region (R) on an upper surface; and
a plurality of batteries (200) having shapes of cross-sectional footprints (F) defined by an outermost profile of a cross section placed parallel to the upper surface of the base frame (100),
wherein the plurality of batteries (200) are disposed inside the certain region (R)on the upper surface of the base frame (100),
the plurality of batteries (200) include a plurality of types of batteries (200N, 200S) having the cross-sectional footprints (F) which have different shapes,
the certain region (R) extends in a first direction and a second direction perpendicular to the first direction,
at least a portion (RCP) of a perimeter of the certain region R obliquely extends in a direction intersecting the first direction and the second,
the cross-sectional footprints (F) of the plurality of batteries (200) extend in the first direction and the second direction,
at least some of the plurality of batteries (200) are disposed side by side in the first direction or the second direction,
among the plurality of types of batteries (200), at least one type of battery (200) is a special type battery (200S), and
at least a portion (FCP) of a perimeter of the cross-sectional footprint (F) of the special type battery (200S) obliquely extends in the direction intersecting the first direction and the second direction along the at least a portion (RCP) of the perimeter of the certain region (R) and extends such that an angle difference between an extending direction of each section of the at least a portion (FCP) of the perimeter of the cross-sectional footprint (F) and an extending direction of each section of the at least a portion (RCP) of the perimeter of the certain region (R) corresponding to each section of the at least a portion (FCP) of the perimeter of the cross-sectional footprint (F) is less than a certain angle.

2. The battery pack of claim 1, wherein the plurality of types of batteries (200) include at least one of a first type battery (200A), a second type battery (200B), a third type battery (200C), and a fourth type battery (200D),
the first type battery (200A), the second type battery (200B), the third type battery (200C), and the fourth type battery (200D) each correspond to the special type battery (200S),
a perimeter of the cross-sectional footprint (F) of the first type battery (200A) includes a first side (a) extending in the first direction, a second side (b) and a third side (c) each extending from both ends of the first side (a) of the first type battery (200A) to one side in the second direction by different lengths, and a fourth side (d) corresponding to the at least a portion (FCP) of the perimeter of the cross-sectional footprint (F) and connecting one ends of the second side (b) and the third side (c) of the first type battery (200A) in the second direction,
a perimeter of the cross-sectional footprint (F) of the second type battery (200B) includes a first side (a) extending in the first direction, a second side (b) and a third side (c) each extending from both ends of the first side (a) of the second type battery (200B) to the other side in the second direction by different lengths, and a fourth side (d) corresponding to the at least a portion (FCP) of the perimeter of the cross-sectional footprint (F) and connecting the other ends of the second side (b) and the third side (c) of the second type battery (200B) in the second direction,
a perimeter of the cross-sectional footprint (F) of the third type battery (200C) includes a first side (a) extending in the first direction, a second side (b) extending from one end or the other end of the first side (a) of the third type battery (200C) in the first direction to the one side in the second direction, and a third side (c) corresponding to the at least a portion (FCP) of the perimeter of the cross-sectional footprint (F) and connecting the other end or the one end of the first side (a) of the third type battery (200C) in the first direction and one end of the second side (b) of the third type battery 200C in the second direction, and
a perimeter of the cross-sectional footprint (F) of the fourth type battery (200D) includes a first side (a) extending in the first direction, a second side (b) extending from one end or the other end of the first side (a) of the fourth type battery (200D) in the first direction to the other side in the second direction, and a third side (c) corresponding to the at least a portion (FCP) of the perimeter of the cross-sectional footprint (F) and connecting the other end or the one end of the first side (a) of the fourth type battery (200D) in the first direction and the other end of the second side b of the fourth type battery (200D) in the second direction.

3. The battery pack of claim 1, wherein the plurality of types of batteries (200) include at least one of a fifth battery (200E) and a sixth type battery (200F),
the fifth type battery (200E) and the sixth type battery (200F) each correspond to the special type battery (200S),
a perimeter of the cross-sectional footprint (F) of the fifth type battery (200E) includes a first side (a) and a second side (b) disposed side by side in the first direction and extending in the second direction, a third side (C) corresponding to the at least a portion (FCP) of the perimeter of the cross-sectional footprint (F) and connecting one ends of the first side (a) and the second side (b) of the fifth type battery (200E) in the second direction, and a fourth side (d) corresponding to the at least a portion (FCP) of the perimeter of the cross-sectional footprint (F) and connecting the other ends of the first side (a) and the second side (b) of the fifth type battery (200E) in the second direction, and
a perimeter of the cross-sectional footprint (F) of the sixth type battery (200F) includes a first side (a) extending in the second direction and a second side (b) of which both ends are connected to both ends of the first side (a) of the sixth type battery (200F) and which protrudes from the first side (a) of the sixth type battery (200F) to one side or the other side in the first direction and corresponds to the at least a portion (FCP) of the perimeter of the cross-sectional footprint (F).

4. The battery pack of claim 2 or 3, wherein the plurality of types of batteries (200) include a normal type battery (200N), and
a perimeter of the cross-sectional footprint (F) of the normal type battery (200N) includes a first side (a) and a second side (b) disposed side by side in the second direction and extending in the first direction by the same length and a third side (c) and a fourth side (d) which are disposed side by side in the first direction, extend in the second direction by the same length, and connect one ends and the other ends of the first side (a) and the second side (b) of the normal type battery (200N), respectively.

5. The battery pack of claim 1, wherein at least some of two or more type batteries (200) among the plurality of types have different chemical characteristics for each type and thus differ in at least one of energy output, energy efficiency, and safety.

6. The battery pack of claim 5, wherein the certain region (R) extends in the first direction and the second direction perpendicular to the first direction,
the at least a portion (RCP) of the perimeter of the certain region (R) obliquely extends in the direction intersecting the first direction and the second direction,
the cross-sectional footprints (F) of the plurality of batteries (200) extend in the first direction and the second direction,
the at least some of the plurality of batteries (200) are disposed side by side in the first direction or the second direction,
the plurality of types of batteries (200) include one or more normal type batteries (200N) and one or more special type batteries (200S),
a perimeter of the cross-sectional footprint (F) of the normal type battery (200N) includes a first side (a) and a second side (b) disposed side by side in the second direction and extending in the first direction by the same length and a third side (c) and a fourth side (d) which are disposed side by side in the first direction, extend in the second direction by the same length, and connect one ends and the other ends of the first side (a) and the second side (b), respectively,
the at least a portion (FCP) of the perimeter of the cross-sectional footprint (F) of the special type battery (200S) obliquely extends in the direction intersecting the first direction and the second direction along the at least a portion (RCP) of the perimeter of the certain region (R) and extends such that the angle difference between the extending direction of each section of the at least a portion (FCP) of the perimeter of the cross-sectional footprint (F) and an extending direction of each section of the at least a portion (RCP) of the perimeter of the certain region (R) corresponding to each section is less than the certain angle, and
at least some of the special type batteries (200S) and at least some of the normal type batteries (200N) have different chemical characteristics and differ in at least one of energy output, energy efficiency, and safety.

7. The battery pack of claim 6, wherein, in the at least some of the special type batteries (200S), the at least a portion (FCP) of the perimeter of the cross-sectional footprint (F) is disposed adjacent to the at least a portion (RCP) of the perimeter of the certain region (R) corresponding to the at least a portion (FCP) of the perimeter of the cross-sectional footprint (F),
the normal type battery (200N) is disposed on a remaining portion of the certain region (R) in which the special type battery (200S) is not disposed, and
at least some of the batteries (200) among the special type batteries (200S) disposed adjacent to the at least a portion (RCP) of the perimeter of the certain region (R) have higher safety than at least some of the batteries (200) among the normal type batteries (200N) that are not disposed adjacent to the at least a portion (RCP) of the perimeter of the certain region (R).

8. An electric vehicle comprising:
the battery pack (100) of claim 7; and
wheels (20),
wherein the base frame (100) extends in the first direction and the second direction and is coupled to the wheels (20), and
at least a portion of a perimeter of one end portion of the certain region (R) in the first direction corresponds to the at least a portion (RCP) of the perimeter of the certain region (R) so that, in the at least some of the special type batteries (200S), the at least a portion (FCP) of the perimeter of the cross-sectional footprint (F) is disposed adjacent to the at least a portion (RCP) of the perimeter of the one end portion of the certain region (R) in the first direction corresponding to the at least a portion (FCP) of the perimeter of the cross-sectional footprint (F).

9. The electric vehicle of claim 8, wherein one side of the base frame (100) in the first direction is a front side of a vehicle, and the other side of the base frame (100) in the first direction is a rear side of the vehicle so that the one end portion of the certain region (R) in the first direction is the front side of the vehicle.

10. The electric vehicle of claim 9, wherein the one end portion of the certain region (R) in the first direction includes a certain section (S) in the first direction of which a width in the second direction gradually decreases toward one side in the first direction, and
a perimeter of the certain region (R) belonging to the certain section (S) corresponds to the at least a portion (RCP) of the perimeter of the certain region (R).

11. The electric vehicle of claim 9, comprising a first motor (30A) and a second motor (30B) provided at one side and the other side in the first direction, respectively,
wherein the wheels (20) include one or more first wheels (20A) provided at the one side in the first direction and coupled to the first motor 30A and one or more second wheels (20B) provided at the other side in the first direction and coupled to the second motor (30B),
among the special type batteries (200S) disposed adjacent to the at least a portion (RCP) of the perimeter of the one end portion of the certain region (R) in the first direction, at least some of the batteries (200) are connected to the first motor (30A) to supply power to the first motor (30A),
at least some of the batteries 200 among the normal type batteries 200N disposed on remaining portions of the certain region (R) on which the special type batteries 200S are not disposed are connected to the second motor (30B) to supply power the second motor (30B), and
the special type battery (200S) connected to the first motor (30A) and the normal type battery (200N) connected to the second motor (30B) differ in at least one of energy output, energy efficiency, and safety.

12. The electric vehicle of claim 11, wherein the special type battery (200S) connected to the first motor (30A) has higher energy efficiency and safety and lower output power than the normal type battery (200N) connected to the second motor (30B).
